# EUROPEAN PATENT APPLICATION

(11) **EP 4 763 026 A1**
(43) Date of publication of application: **24.06.2026**
(21) Application number: 24903984.3
(22) Date of filing: 06.11.2024
(51) Int. Cl.: A47L 9/28, G06N 3/045

(54) **ELECTRONIC DEVICE FOR ADJUSTING POWER CONSUMPTION ACCORDING TO USE OF NEURAL NETWORK MODEL, AND CONTROL METHOD THEREOF**

(30) Priority: 15.12.2023 KR 20230183353
(71) Applicant: Samsung Electronics Co., Ltd., Suwon-si, Gyeonggi-do 16677 (KR)
(72) Inventor: LEE, Yunwoo, Suwon-si, Gyeonggi-do 16677 (KR); KWON, Taejun, Suwon-si, Gyeonggi-do 16677 (KR); KIM, Sujin, Suwon-si, Gyeonggi-do 16677 (KR); AHN, Sangwon, Suwon-si, Gyeonggi-do 16677 (KR); LEE, Bokyung, Suwon-si, Gyeonggi-do 16677 (KR); JO, Eunae, Suwon-si, Gyeonggi-do 16677 (KR); HAHM, Seongil, Suwon-si, Gyeonggi-do 16677 (KR)
(74) Representative: HGF
(86) International application number: PCT/KR2024/017395
(87) International publication number: WO 2025/127417

(57) **Abstract**

An electronic apparatus includes memory storing instructions, and at least one processor connected to the memory and configured to control the electronic apparatus using a neural network model, where the instructions, when executed by the at least one processor, cause the electronic apparatus to identify whether to use the neural network model based on a state of the electronic apparatus, based on identifying that the neural network model is to be used, identify an operation mode of the electronic apparatus as one of a first mode having a first power consumption or a second mode having a second power consumption greater than the first power consumption, and adjust power consumption of the electronic apparatus based on the identified operation mode.

## Description

### [Technical Field]

The disclosure relates to an electronic apparatus and a controlling method thereof, and more particularly, to an electronic apparatus that adjusts power consumption based on the use of a neural network model and a controlling method thereof.

### [Background Art]

With the development of electronic technology, electronic apparatuses that provide various functions are being developed. In particular, portable electronic apparatuses with on-device artificial intelligence (AI) have recently been developed to improve user convenience.

However, since portable electronics are powered by batteries, their use of computing power, memory, and power is limited.

Accordingly, there is a need to flexibly change the resources required to run an AI model.

### [Detailed Description of the Disclosure]

### [Technical Solution]

Provided are an electronic apparatus capable of adaptively adjusting power consumption based on the use of a neural network model and a controlling method thereof.

Additional aspects will be set forth in part in the description which follows and, in part, will be apparent from the description, or may be learned by practice of the presented embodiments.

According to an aspect of the disclosure, an electronic apparatus may include memory storing instructions, and at least one processor connected to the memory and configured to control the electronic apparatus using a neural network model, where the instructions, when executed by the at least one processor, cause the electronic apparatus to identify whether to use the neural network model based on a state of the electronic apparatus, based on identifying that the neural network model is to be used, identify an operation mode of the electronic apparatus as one of a first mode having a first power consumption or a second mode having a second power consumption greater than the first power consumption, and adjust power consumption of the electronic apparatus based on the identified operation mode.

The instructions, when executed by the at least one processor, may cause the electronic apparatus to, based on identifying that the operation mode of the electronic apparatus is the second mode, enter an input feature to the neural network model, and based on identifying that the operation mode of the electronic apparatus is the first mode, update values of the input feature to preset values, and enter the input feature having updated values to the neural network model.

The instructions, when executed by the at least one processor, may cause the electronic apparatus to update values of the input feature to preset values based on at least one of a feature importance value or a data type of the input feature, and the feature importance value may indicate an importance of the input feature.

The instructions, when executed by the at least one processor, may cause the electronic apparatus to, based on identifying that the operation mode of the electronic apparatus is the first mode, use a first neural network model, and based on identifying that the operation mode of the electronic apparatus is the second mode, use a second neural network model with higher power consumption than the first neural network model.

The second neural network model may include more input features and layers than the first neural network model and may be configured to consume more power than the first neural network model.

The instructions, when executed by the at least one processor, may cause the electronic apparatus to identify whether to use the neural network model based on at least one of an operation of the electronic apparatus and an operability of a preset function provided by the electronic apparatus.

The instructions, when executed by the at least one processor, may cause the electronic apparatus to identify the operation mode of the electronic apparatus as one of the first mode or the second mode based on at least one of a charging state of a battery of the electronic apparatus, power consumption according to the use of the neural network model and an importance of a function related to the use of the neural network model.

The instructions, when executed by the at least one processor, may cause the electronic apparatus to, based on the charging state being less than a first threshold value, charge the battery, based on the charging state being equal to or greater than the first threshold value and less than a second threshold value, identify the operation mode of the electronic apparatus as the first mode, and based on the charging state being equal to or greater than the second threshold value, identify the operation mode of the electronic apparatus as the second mode.

The electronic apparatus may include a user interface, and the instructions, when executed by the at least one processor, may cause the electronic apparatus to receive a user command regarding the importance of a function related to the use of the neural network model through the user interface, and identify the operation mode of the electronic apparatus as one of the first mode or the second mode based on the user command.

The electronic apparatus may include a sensor configured to detect a posture of the electronic apparatus, and the instructions, when executed by the at least one processor, may cause the electronic apparatus to identify whether to use the neural network model based on the posture of the electronic apparatus being changed by more than a preset value, and identify whether to use the neural network model based on the posture of the electronic apparatus.

The electronic apparatus may include a cleaner, and the instructions, when executed by the at least one processor, may cause the electronic apparatus to identify whether to use the neural network model based on at least one of the cleaner running or a mop cleaning function of the cleaner being available, based on identifying that the neural network model is to be used, identify the operation mode of the cleaner as one of the first mode or the second mode based on at least one of a charging state of a battery of the electronic apparatus, power consumption according to the use of the neural network model, and a user command for the first mode, and adjust power consumption based on the identified operation mode.

The instructions, when executed by the at least one processor, may cause the electronic apparatus to identify a type of floor surface on a travel path of the cleaner using the neural network model, and based on the identified type being a preset type, change the travel path or limit use of the mop cleaning function.

According to an aspect of the disclosure, a method of controlling an electronic apparatus may include identifying whether to use a neural network model based on a state of the electronic apparatus, based on identifying that the neural network model is to be used, identifying an operation mode of the electronic apparatus as one of a first mode having a first power consumption or a second mode having second power consumption greater than the first power consumption, and adjusting power consumption based on the identified operation mode.

The adjusting of the power consumption may include based on identifying that the operation mode of the electronic apparatus is the second mode, entering an input feature to the neural network model, and based on identifying that the operation mode of the electronic apparatus is the first mode, updating values of the input feature to preset values, and entering the input feature having updated values to the neural network model.

The updating the values of the input feature to preset values may be performed based on at least one of a feature importance value indicating importance of the input feature of or a data type of the input feature.

The method may include, based on identifying that the operation mode of the electronic apparatus is the first mode, using a first neural network model, and based on identifying that the operation mode of the electronic apparatus is the second mode, using a second neural network model with higher power consumption than the first neural network model.

The identifying the operation mode of the electronic apparatus as one of the first mode or the second mode may be performed based on at least one of a charging state of a battery of the electronic apparatus, power consumption according to the use of the neural network model and an importance of a function related to the use of the neural network model.

The method may include, based on the charging state being less than a first threshold value, charging the battery, based on the charging state being equal to or greater than the first threshold value and less than a second threshold value, identifying the operation mode of the electronic apparatus as the first mode, and based on the charging state being equal to or greater than the second threshold value, identifying the operation mode of the electronic apparatus as the second mode.

The electronic apparatus may include a cleaner, and the identifying whether to use the neural network model may be performed based on at least one of the cleaner running or a mop cleaning function of the cleaner being available.

According to an aspect of the disclosure, a non-transitory computer readable storage medium may store instructions that, when executed by at least one processor, cause the at least one processor to identify whether to use a neural network model based on a state of an electronic apparatus, based on identifying that the neural network model is to be used, identify an operation mode of the electronic apparatus as one of a first mode having a first power consumption or a second mode having a second power consumption greater than the first power consumption, and adjust power consumption of the electronic apparatus based on the identified operation mode.

### [Brief Description of Drawings]

The above and other aspects, features, and advantages of certain embodiments of the present disclosure will be more apparent from the following description taken in conjunction with the accompanying drawings, in which:
FIG. 1 is a diagram illustrating an Internet of Things (IoT) environment according to an embodiment;
FIG. 2 is a block diagram illustrating a configuration of an electronic apparatus according to an embodiment;
FIG. 3 is a block diagram illustrating a configuration of an electronic apparatus according to an embodiment;
FIG. 4 is a flowchart illustrating a method of identifying an operation mode of an electronic apparatus according to an embodiment;
FIG. 5 is a diagram illustrating an electronic apparatus as a cleaner according to an embodiment;
FIG. 6 is a block diagram illustrating a configuration of an electronic apparatus as a cleaner according to an embodiment;
FIGS. 7 and 8 are flowcharts illustrating methods of operating an electronic apparatus as a cleaner according to an embodiment; and
FIG. 9 is a flowchart illustrating a controlling method of an electronic apparatus according to an embodiment.

### [Detailed Description of Embodiments]

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms. It is to be understood that singular forms include plural referents unless the context clearly dictates otherwise. The terms including technical or scientific terms used in the disclosure may have the same meanings as generally understood by those skilled in the art.

The various embodiments of the present disclosure and the terms used herein are not intended to limit the technical features described in the present disclosure to specific embodiments, and should be understood to include various changes, equivalents, or replacements of the embodiments.

The singular form of a noun corresponding to an item may include a single item or a plurality of items, unless the relevant context clearly indicates otherwise.

In the present disclosure, "A or B", "at least one of A and B", "at least one of A or B", "A, B or C", "at least one of A, B and C", and "at least one of A, B, or C" may include any one of the items listed together in the corresponding phrase, or any possible combination thereof.

Terms such as "first", "second", "1st", or "2nd" may be used simply to distinguish one component from another, and do not limit the corresponding components in other respects (e.g., importance or order).

When one component (e.g., first) is said to be "coupled" or "connected" to another component (e.g., second) with or without the term of "functionally" or "communicatively", it may indicate that one component may be connected to another component directly (e.g., via cable), wirelessly, or through a third component.

Terms such as "include" or "have" are intended to indicate the presence of features, numbers, steps, operations, components, parts, or combinations thereof described in this disclosure, but are not intended to preclude the possibility of the presence or addition of one or more other features, numbers, or steps, operations, components, parts, or combinations thereof.

When a component is said to be "connected," "coupled," "supported," or "in contact" with another component, this may indicate not only the case where the components are directly connected, coupled, supported, or in contact, but also the case where they are indirectly connected, coupled, supported, or in contact through a third component.

When a component is said to be located "on" another component, this includes not only the where a component is in contact with another component, but also the case where another component exists between the two components.

The term "and/or" includes a combination of a plurality of related components described herein or any component of a plurality of related components disclosed herein

Hereinafter, the operation principle and embodiments of the present disclosure will be described with reference to the accompanying drawings.

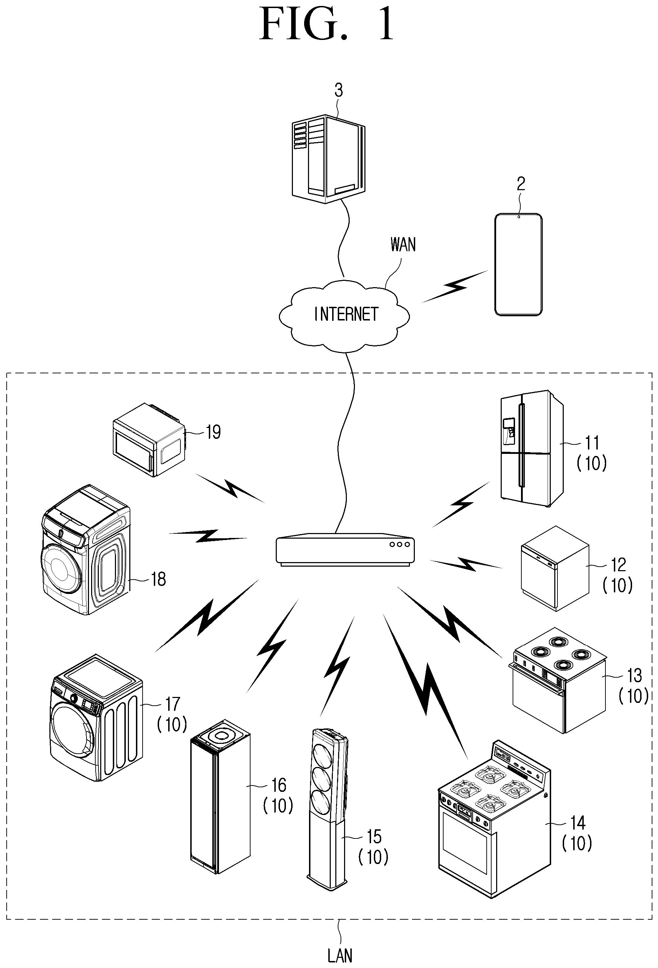

FIG. 1 is a diagram illustrating an Internet of Things (IoT) environment according to an embodiment.

A home appliance 10 may include a communication module capable of performing communication with other home appliances, a user device 2, and/or a server 3, a user interface for receiving a user input or outputting information to the user, at least one processor for controlling the operation of the home appliance 10, and at least one memory in which programs/instructions for controlling the operation of the home appliance 10 are stored.

The home appliance 10 may be at least one of various types of home appliances. For example, the home appliance 10 may include at least one of, but not limited to, a refrigerator 11, a dishwasher 12, an electric range 13, an electric oven 14, an air conditioner 15, a clothes manager 16, a washing machine 17, a dryer 18, and a microwave oven 19, and may include, for example, a robot cleaner, a vacuum cleaner, a television, etc. The aforementioned appliances are only examples, and in addition to the aforementioned appliances, a device connected to other home appliances, the user device 2 and/or the server 3 to perform the operations described below may be included in the home appliance 10 according to an embodiment.

The server 3 may include a communication module capable of performing communication with other servers, the home appliance 10, and/or the user device 2, at least one processor capable of processing data received from the other servers, the home appliance 10, and/or the user device 2, and at least one memory capable of storing programs/instructions for processing data or processed data. The server 3 may be implemented as a variety of computing devices, such as a workstation, a cloud, a data drive, a data station, and the like. The server 3 may be implemented as one or more servers that are physically or logically separated based on function, detailed configuration of the function, or data, and may perform communication with each other to send/receive data and process the sent/received data.

The server 3 may perform functions such as managing user accounts, registering the home appliance 10 in association with the user accounts, managing or controlling the registered home appliance 10, etc. For example, a user may connect to the server 3 via the user device 2 and create a user account. The user account may be identified by a username and password set by the user. The server 3 may register the home appliance 10 to the user account according to a predetermined procedure. For example, the server 3 may associate identification information of the home appliance 10 (e.g., serial number or media access control (MAC) address, etc.) with the user account to register, manage, and control the home appliance 10. The user device 2 may include a communication module capable of performing communication with the home appliance 10 and/or the server 3, a user interface for receiving a user input or outputting information to the user, at least one processor for controlling the operation of the user device 2, and at least one memory for storing programs/instructions for controlling the operation of the user device 2.

The user device 2 may be carried by the user, or placed in the user's home, office, or the like. The user device 2 may include, but is not limited to, a personal computer (PC), a terminal, a portable telephone, a smart phone, a handheld device, a wearable device, and the like.

The memory of the user device 2 may store a program, i.e. an application, for controlling the home appliance 10. The application may be sold and installed on the user device 2 or may be downloaded and installed from an external server.

By executing an application installed on the user device 2, the user may connect to the server 3 to create a user account, and may perform communication with the server 3 based on the logged-in user account to register the home appliance 10.

For example, when the home appliance 10 is operated to allow the home appliance 10 to connect to the server 3 by following a procedure guided by the application installed on the user device 2, the server 3 may register the home appliance 10 with the user account by listing the identification information of the home appliance 10 (e.g., serial number or MAC address, etc.) in the corresponding user account.

The user may control the home appliance 10 using the application installed on the user device 2. For example, when the user logs into the user account with the application installed on the user device 2, the home appliance 10 registered in the user account appears, and when the user enters a control command for the home appliance 10, the control command may be delivered to the home appliance 10 through the server 3.

A network may include both wired and wireless networks. The wired network may include a cable network, a telephone network, etc., and the wireless network may include any network that transmits and receives signals through radio waves. The wired and wireless networks may be connected to each other.

The network may include a wide area network (WAN), such as the Internet, a local area network (LAN) formed around an access point (AP), and a near-field wireless network that does not go through an AP. The near-field wireless network may include, but is not limited to, Bluetooth^{™} (IEEE 802.15.1), Zigbee (IEEE 802.15.4), Wi-Fi Direct, Near Field Communication (NFC), Z-Wave, etc.

The AP may connect the home appliance 10 or the user device 2 to a wide area network (WAN) to which the server 3 is connected. The home appliance 10 or the user device 2 may be connected to the server 3 through the wide area network (WAN).

The AP may perform communication with the home appliance 10 or the user device 2 using wireless communications such as Wi-Fi^{™} (IEEE 802.11), Bluetooth^{™} (IEEE 802.15.1), Zigbee (IEEE 802.15.4), etc., and may connect to a WAN using wired communication, but is not limited thereto.

According to various embodiments, the home appliance 10 may be directly connected to the user device 2 or the server 3 without going through an AP.

The home appliance 10 may be connected to the user device 2 and/or the server 3 through a far-field wireless network or a near-field wireless network.

For example, the home appliance 10 may be connected to the user device 2 through a near-field wireless network (e.g., Wi-Fi Direct).

In another example, the home appliance 10 may be connected to the user device 2 and/or the server 3 through a WAN using a far-field wireless network (e.g., a cellular communication module).

In another example, the home appliance 10 may be connected to a WAN using wired communication, and may be connected to the user device 2 and/or the server 3 through the WAN.

In the case where the home appliance 10 may connect to the WAN using wired communication, it may also act as an AP. Accordingly, the home appliance 10 may connect other home appliances to the WAN to which the server 3 is connected. In addition, other home appliances may connect the home appliance 10 to the WAN to which the server 3 is connected.

The home appliance 10 may transmit information about its operation or state to another home appliance, the user device 2, and/or the server 3 through a network. For example, when a request is received from the server 3 or when a certain event occurs on the home appliance 10, the home appliance 10 may transmit information about its operation or state to another home appliance, the user device 2, and/or the server 3, periodically or in real time. When information about the operation or state is received from the home appliance 10, the server 3 may update the stored information about the operation or state of the home appliance 10 and transmit the updated information about the operation and state of the home appliance 10 to the user device 2 through the network. Updating the information may include various operations in which the existing information is changed, such as adding new information to the existing information, replacing the existing information with new information, etc.

The home appliance 10 may obtain various information from other home appliances, the user device 2, and/or the server 3, and may provide the obtained information to the user. For example, the home appliance 10 may obtain from the server 3 information related to functions of the home appliance 10 (e.g., recipes, laundry instructions, etc.) and/or information about various environments (e.g., weather, temperature, humidity, etc.), and output the obtained information through a user interface.

The home appliance 10 may operate in response to a control command received from other home appliances, the user device 2, and/or the server 3. For example, when the home appliance 10 has obtained prior authorization from the user to operate in response to a control command from the server 3 even without a user input, the home appliance 10 may operate in response to a control command received from the server 3. The control command received from the server 3 may include, but is not limited to, control commands entered by the user through the user device 2 or control commands based on preset conditions.

The user device 2 may transmit information about the user to the home appliance 10 and/or the server 3 through a communication module. For example, the user device 2 may transmit information about the user's location, the user's health status, the user's preferences, the user's schedule, etc. to the server 3. The user device 2 may transmit information about the user to the server 3 based on the user's prior authorization.

The home appliance 10, the user device 2, and/or the server 3 may determine a control command using a technology such as artificial intelligence. For example, the server 3 may receive information about the operation or state of the home appliance 10 or information about the user of the user device 2, process the information using a technology such as artificial intelligence, and transmit the processing results or control commands to the home appliance 10 or the user device 2 based on the processing results.

The electronic apparatus 100 described hereinafter may be one of many different types of home appliances 10, and will be described herein with the expression 'electronic apparatus 100' for convenience of explanation.

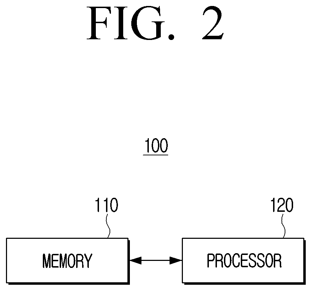

FIG. 2 is a block diagram illustrating a configuration of an electronic apparatus according to an embodiment.

The electronic apparatus 100 may include a device that uses a neural network model, and may be a robot cleaner, a cleaner, a television TV, a desktop PC, a laptop, a smartphone, a tablet PC, an electronic blackboard, a smart watch, a head mounted device (HMD) device, a smart car, or the like. However, the electronic apparatus 100 is not limited thereto, and the electronic apparatus 100 may be any device capable of using a neural network model.

According to an embodiment, the electronic apparatus 100 may be a device on which an on-device artificial intelligence AI is provided. According to an embodiment, the electronic apparatus 100 is powered by a battery, and may be a device on which an on-device AI is provided.

As shown in FIG. 2, the electronic apparatus 100 may include memory 110 and a processor 120.

The memory 110 may refer to hardware that stores information, such as data, in electrical or magnetic form for access by the processor 120 or the like. To this end, the memory 110 may be implemented as at least one of the following hardware: non-volatile memory, volatile memory, flash memory, hard disk drive (HDD) or solid state drive (SSD), random access memory (RAM), read-only memory (ROM), etc.

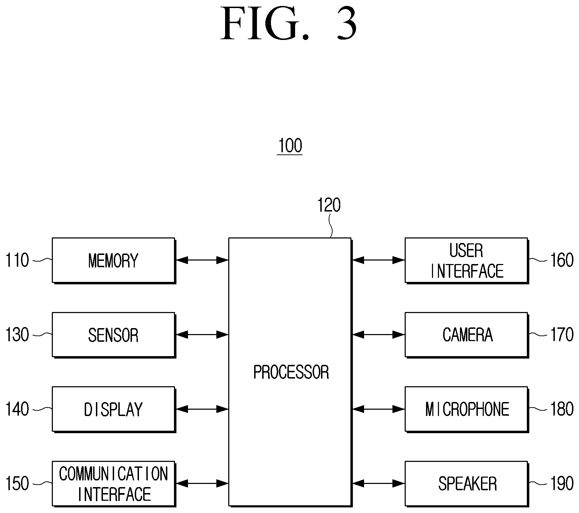

The memory 110 may store at least one instruction for the operation of the electronic apparatus 100 or the processor 120. The instruction is a code unit that directs the operation of the electronic apparatus 100 or processor 120, and may be written in a machine language that may be understood by a computer. Alternatively, the memory 110 may store extended display identification data (EDID) and display port configuration data (DPCD) regarding a display (e.g., display 140 of FIG. 3).

The memory 110 may store data, which is information in bits or bytes that may represent characters, numbers, images, and the like. For example, the memory 110 may store a neural network management module, a battery management module, a posture identification module, etc.

The memory 110 is accessed by the processor 120, and reading/writing/modifying/deleting/updating instructions, a set of instructions, or data may be performed by the processor 120.

The processor 120 controls the overall operations of the electronic apparatus 100. Specifically, the processor 120 may be connected to each component of the electronic apparatus 100 to control the overall operations of the electronic apparatus 100. For example, the processor 120 may be connected to components such as the memory 110, a sensor, a display, etc. to control the operations of the electronic apparatus 100.

The processor may include one or more of a central processing unit (CPU), a graphics processing unit (GPU), an accelerated processing unit (APU), a many integrated core (MIC), a neural processing unit (NPU), a hardware accelerator, or a machine learning accelerator. The processor may control one or any combination of the other components of the electronic apparatus 100, and may perform communication-related operations or data processing. The processor may execute one or more programs or instructions stored in the memory 110. For example, the processor may perform a method according to an embodiment by executing one or more instructions stored in the memory 110.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors may be implemented as a single core processor including a single core, or as one or more multicore processors including a plurality of cores (e.g., homogeneous multicore or heterogeneous multicore). When the one or more processors are implemented as multicore processors, each of the plurality of cores included in a multicore processor may include processor internal memory, such as cache memory and on-chip memory, and a common cache shared by the plurality of cores may be included in the multicore processor. Further, each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

The one or more processors may refer to a system-on-chip (SoC) in which one or more processors and other electronic components are integrated, a single-core processor, a multi-core processor, or a core included in a single-core processor or multi-core processor. The core may be implemented as CPU, GPU, APU, MIC, NPU, hardware accelerator, or machine learning accelerator, etc., but the core is not limited to the embodiments of the present disclosure. Thus, the processor 120 may be implemented as one processor or a plurality of processors, as one processor with a plurality of cores, as a plurality or processors each including a plurality of cores, and any combination thereof. However, hereinafter, for convenience of explanation, the operation of the electronic apparatus 100 will be described using the term processor 120.

The processor 120 may identify whether to use a neural network model based on a state of the electronic apparatus 100. For example, the processor 120 may identify whether to use a neural network model based on at least one of the operation of the electronic apparatus 100 or operability of a preset function provided by the electronic apparatus 100. For example, the processor 120 may identify that a neural network model is to be used when a display included in the electronic apparatus 100 is turned on, and may identify that a neural network model is not to be used when the display is turned off.

When it is identified that a neural network model is to be used, the processor 120 may identify the operation mode of the electronic apparatus 100 as one of a first mode or a second mode that consumes more power than the first mode. For example, when it is identified that a neural network model is to be used, the processor 120 may identify the operation mode of the electronic apparatus 100 as one of the first mode or the second mode based on at least one of a charging state of a battery included in the electronic apparatus 100, power consumption according to the use of the neural network model, or importance of a function related to the use of the neural network model.

For example, when the charging state is less than a first threshold value, the processor 120 may charge the battery. When the charging state is equal to or greater than the first threshold value and less than a second threshold value, the processor 120 may identify the operation mode of the electronic apparatus 100 as the first mode. When the charging state is equal to or greater than the second threshold value, the processor 120 may identify the operation mode of the electronic apparatus 100 as the second mode. In other words, the processor 120 may also identify whether the electronic apparatus 100 should operate in a battery charging mode outside of the first mode and the second mode.

Alternatively, the electronic apparatus 100 may further include a user interface, and the processor 120 may receive, via the user interface, a user command regarding the importance of a function related to the use of the neural network model, and identify the operation mode of the electronic apparatus 100 as one of the first mode or the second mode based on the user command.

The first mode may be a low power mode, and the second mode may be a high power mode. Alternatively, the first mode may be a low power mode and the second mode may be a normal mode. In the second mode, the processor 120 may use resources without considering power consumption, and in the first mode, the processor 120 may use resources limitedly by considering power consumption.

The processor 120 may adjust power consumption according to the use of the neural network model based on the identified operation mode.

For example, when it is identified that the operation mode of the electronic apparatus 100 is the second mode, the processor 120 may enter at least one input feature to the neural network model, and when it is identified that the operation mode of the electronic apparatus 100 is the first mode, the processor 120 may update some values of the at least one input feature to preset values and input the updated at least one input feature to the neural network model.

For example, when it is identified that the operation mode of the electronic apparatus 100 is the second mode, the processor 120 may enter the at least one input feature to the neural network model, and when it is identified that the operation mode of the electronic apparatus 100 is the first mode, update some values of the at least one input feature to zero and input the updated at least one input feature to the neural network model. In other words, as some of the values of the at least one input feature are changed to zero in the first mode, the power consumed in the computation process may be reduced.

The memory 110 may store a feature importance value indicating the importance of each of the at least one input feature of the neural network model, and when it is identified that the operation mode of the electronic apparatus is the first mode, the processor 120 may update the some values of the at least one input feature to preset values based on at least one of the importance value or the data type of each of the at least one input feature. In other words, the processor 120 may update the at least one input feature having a relatively low importance value to a preset value, thereby reducing the extent of the accuracy of the neural network model. Alternatively, the processor 120 may update the at least one input feature of a real number type rather than an integer type of data to a preset value to reduce power consumption during computation.

The feature importance value indicating the importance of each of the at least one input feature may be obtained during the training of the neural network model or after the training is completed.

For example, during the training process of a neural network model, the performance of the neural network model may be compared by excluding a feature of the at least one input feature one by one, and the feature with a performance that deteriorates significantly may be given higher importance. For example, assuming that there are features A, B, and C, the importance value of feature A may be determined as Score_M1 - Score_M1_BC = 0.99 - 0.8 = 0.19, the importance value of feature B may be determined as Score_M1 - Score_M1_AC = 0.99 - 0.9 = 0.09, and the importance value of feature C may be determined as Score_M1 - Score_M1_AB = 0.99 - 0.95 = 0.04. In this case, the processor 120 may identify that feature A is the most important feature, and feature C is the least important feature. Here, Score_M1 may be the performance of the trained model including all of features A, B, and C, Score_M1_BC may be the performance of the trained model including only features B and C, Score_M1_AC may be the performance of the trained model including only features A and C, and Score_M1_AB may be the performance of the model trained including only features A and B.

Alternatively, the processor 120 may randomly shuffle the value of one of the features of the at least one input feature or add random noise to the trained neural network model and compare the performance of the neural network model. For example, assuming that there are features A, B, and C, when the value of feature A is changed, the importance value of feature A may be determined as Score_M2 - Score_M2_A = 0.99 - 0.7 = 0.29, when the value of feature B is changed, the importance of feature B may be determined as Score_M2 - Score_M2_B = 0.99 - 0.8 = 0.19, and when the value of feature C is changed, the importance of feature C may be determined as Score_M2 - Score_M2_C = 0.99 - 0.95 = 0.04. In this case, the processor 120 may identify that feature A is the most important feature, and feature C is the least important feature. Here, Score_M2 may be the performance of the trained model including features A, B, and C, Score_M2_A may be the performance of the model when input with different values of feature A, Score_M2_B may be the performance of the model when input with different values of feature B, and Score_M2_C may be the performance of the model when input with different values of feature C.

While the above describes a method for adjusting power consumption in one neural network model, the present disclosure is not limited thereto. For example, the memory 110 may store a first neural network model and a second neural network model with higher performance than the first neural network model, and the processor 120 may use the first neural network model when it is identified that the operation mode of the electronic apparatus 100 is the first mode, and use the second neural network model when it is identified that the operation mode of the electronic apparatus 100 is the second mode. The second neural network model may have more input features and layers than the first neural network model, and may be a model that consumes more power than the first neural network model.

The electronic apparatus 100 may further include a sensor, and when the posture of the electronic apparatus 100 is changed by more than a preset value as determined based on sensing information obtained via the sensor, the processor 120 may identify whether to use the neural network model based on the posture of the electronic apparatus 100.

Functions related to AI according to the present disclosure may be operated via the processor 120 and the memory 110.

The processor 120 may include one or more processors. In this case, one or more processors may be general-purpose processors such as CPU, APU, or Digital Signal Processor (DSP), dedicated graphics processors such as GPU or Vision Processing Unit (VPU), or dedicated AI processors such as NPU.

One or more processors control input data to be processed according to predefined operation rules or AI models stored in the memory 110. Alternatively, when one or more processors are dedicated AI processors, the AI dedicated processors may be designed with a hardware structure specialized for processing a specific AI model. The predefined operation rules or AI models are characterized by being created through training.

Here, "being created by training" may indicate that the basic AI model is trained using a large amount of learning data by a learning algorithm and thus, predefined operation rules or AI are set to perform the desired characteristics (or purpose). This training may be accomplished in the device itself that performs AI according to the present disclosure, or may be accomplished through a separate server and/or system. Examples of learning algorithms include, but are not limited to, supervised learning, unsupervised learning, semi-supervised learning, or reinforcement learning.

An AI model may include a plurality of neural network layers. Each of the plurality of neural network layers has a plurality of weight values, and neural network calculation is performed through calculation between the calculation result of the previous layer and the plurality of weights. The plurality of weights of the plurality of neural network layers may be optimized by the learning results of the AI model. For example, during the learning process, the plurality of weights may be updated so that loss or cost values obtained from the AI model are reduced or minimized.

The artificial neural network may include a deep neural network (DNN), for example, Convolutional Neural Network (CNN), Recurrent Neural Network (RNN), Restricted Boltzmann Machine (RBM), Deep Belief Network (DBN), Bidirectional Recurrent Deep Neural Network (BRDNN), Generative Adversarial Network (GAN), or Deep Q-Networks, etc., but are not limited thereto.

FIG. 3 is a block diagram illustrating a configuration of an electronic apparatus according to an embodiment. The electronic apparatus 100 may include the memory 110 and the processor 120. The electronic apparatus 100 may further include a sensor 130, a display 140, a communication interface 150, a user interface 160, a camera 170, a microphone 180, and a speaker 190. Among the components shown in FIG. 3, detailed descriptions of aspects that are the same as or similar to the components shown in FIG. 2 may be omitted.

The sensor 130 may be configured to obtain sensing information through at least one sensor. For example, the sensor 130 may include at least one of a gyro sensor, an acceleration sensor, or a magnetometer sensor.

The gyro sensor is a sensor for detecting the rotation angle of the electronic apparatus 100 by measuring the angular velocity, and may measure changes in the direction of an object by maintaining a certain initially set direction with high accuracy, regardless of the rotation of the earth. The gyro sensor may also be referred to as a gyroscope, and may be implemented mechanically or optically using light.

The acceleration sensor is a sensor for measuring the acceleration or intensity of impact of the electronic apparatus 100, and may also be referred to as an accelerometer. The acceleration sensor may detect dynamic forces such as acceleration, vibration, and shock, and may be implemented as inertial, gyro, silicon semiconductor types, etc. depending on the detection method. In other words, the acceleration sensor is a sensor that senses the degree of tilt of the electronic apparatus 100 using gravitational acceleration, and may typically include a 2-axis or 3-axis fluxgate.

The magnetometer sensor generally refers to a sensor that measures the strength and direction of the magnetism of the earth, but may also include a sensor that measures the strength of magnetization of an object, and may also be referred to as a magnetometer. The magnetometer sensor may be implemented by hanging a magnet horizontally in a magnetic field and measuring the direction in which the magnet moves, or by rotating a coil in a magnetic field and measuring the induced electromotive force generated in the coil to measure the strength of the magnetic field.

Using the above sensors, posture information of the electronic apparatus 100 may be obtained. For example, the posture information of the electronic apparatus 100 may be expressed as a pitch angle, a roll angle, and an azimuth angle.

In the above, for convenience of explanation, the sensor 130 has been described as including at least one of a gyro sensor, an acceleration sensor, a magnetometer sensor, or a sound sensor. However, the sensor 130 is not limited to thereto, and the sensor 130 may be any sensor capable of obtaining posture information of the electronic apparatus 100. For example, the sensor 130 may further include a lidar sensor, an ultrasonic sensor, etc.

The display 140 is configured to display content, which may be implemented as various types of displays, such as liquid crystal displays (LCDs), organic light emitting diodes (OLEDs) displays, plasma display panels (PDPs), and the like. The display 140 may also include drive circuitry, backlight units, and the like, which may be implemented in the form of a-si thin film transistors (TFTs), low temperature poly silicon (LTPS) TFTs, organic TFTs (OTFTs), and the like. The display 140 may be implemented as a touch screen combined with a touch sensor, a flexible display, a three-dimensional (3D) display, and the like.

The communication interface 150 is configured to perform communication with various types of external devices according to various types of communication methods. For example, the electronic apparatus 100 may perform communication with a server or a user terminal device via the communication interface 150.

The communication interface 150 may include a Wi-Fi module, a Bluetooth module, an infrared communication module, a wireless communication module, and the like. Each communication module may be implemented in the form of at least one hardware chip.

The Wi-Fi module and the Bluetooth module perform communication using a Wi-Fi method and a Bluetooth method, respectively. When using a Wi-Fi module or a Bluetooth module, various connection information such as service set identifier (SSID) and session keys are first transmitted and received, and various information may be transmitted and received after establishing a communication connection using the same. The infrared communication module performs communication according to an infrared Data Association (IrDA) communication technology which transmits data wirelessly over a short distance using infrared rays between optical light and millimeter waves.

In addition to the above-described communication methods, the wireless communication module may include at least one communication chip that performs communication according to various wireless communication standards, such as Zigbee, 3rd Generation (3G), 3rd Generation Partnership Project (3GPP), Long Term Evolution (LTE), LTE Advanced (LTE-A), 4th Generation (4G), 5th Generation (5G), etc.

Alternatively, the communication interface 150 may include a wired communication interface such as high definition multimedia interface (HDMI), DisplayPort, Thunderbolt, universal serial bus (USB), RGB, D-SUB, digital visual interface (DVI), etc.

In addition, the communication interface 150 may include at least one of a LAN module, an Ethernet module, and a wired communication module that performs communication using pair cables, coaxial cables, fiber optic cables, etc.

The user interface 160 may be implemented as a button, a touch pad, a mouse, a keyboard, etc., or may be implemented as a touch screen that may also perform a display function and a manipulation input function. The button may be various types of buttons such as a mechanical button, a touch pad, a wheel, etc. formed in any arbitrary area of the exterior of the main body of the electronic apparatus 100, such as the front, side, or back.

The camera 170 is configured to capture still images or moving images. The camera 170 may capture still images at a specific point in time, but may also capture still images continuously. The camera 170 may photograph at least one direction of the electronic apparatus 100.

The camera 170 may include a lens, a shutter, an aperture, a solid-state imaging device, an analog front end (AFE), and a timing generator (TG). The shutter controls the time when light reflected from a subject enters the camera 170, and the aperture controls the amount of light entering the lens by mechanically increasing or decreasing the size of the opening through which the light enters. When the light reflected from the subject is accumulated as a photoelectric charge, the solid-state imaging device outputs an image by the photoelectric charge as an electrical signal. The TG outputs a timing signal to read out the pixel data of the solid-state imaging device, and the AFE samples and digitizes the electrical signal output from the solid-state imaging device.

The microphone 180 is configured to receive sound input and convert it into an audio signal. The microphone 180 is electrically connected to the processor 120, and may receive sound under the control of the processor 120.

For example, the microphone 180 may be integrally formed in the direction of the top, front, side, etc. of the electronic apparatus 100. Alternatively, the microphone 180 may be formed on a remote controller, etc. that is separate from the electronic apparatus 100. In this case, the remote controller may receive sound through the microphone 180, and provide the received sound to the electronic apparatus 100.

The microphone 180 may include various components such as a microphone that collects analog sound, an amplification circuit that amplifies the collected sound, an analog to digital (A/D) conversion circuit that samples the amplified sound and converts it into a digital signal, a filter circuit that removes noise components from the converted digital signal, etc.

The microphone 180 may be implemented in the form of a sound sensor, and may be any configuration capable of collecting sound.

The speaker 190 is configured to output various notification sounds or voice messages as well as various audio data processed by the processor 120.

As described above, the electronic apparatus 100 may efficiently manage resources and reduce power consumption by adjusting power consumption according to the use of the neural network model in response to various conditions.

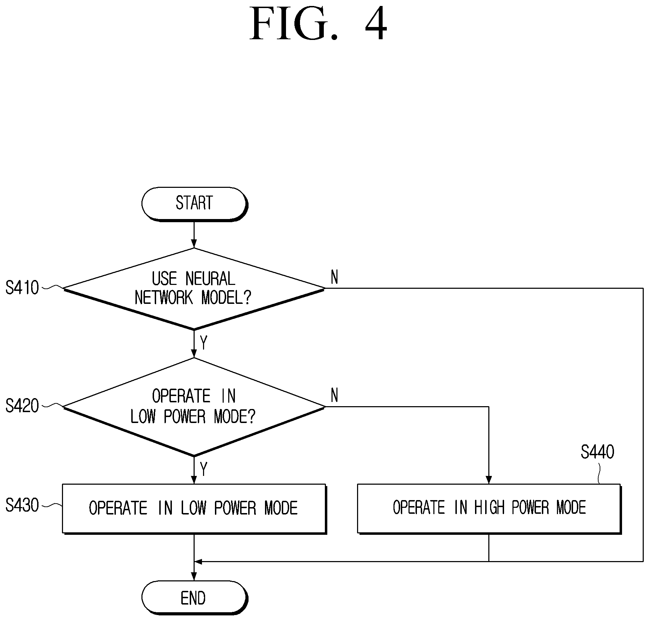

Hereinafter, the operation of the electronic apparatus 100 will be described in greater detail with reference to FIGS. 4 to 8. For convenience of explanation, individual embodiments are described in FIGS. 4 to 8. However, the individual embodiments of FIGS. 4 to 8 may be performed in any combination. Meanwhile, for convenience of explanation, FIGS. 4 to 8 will describe the first mode as a low power mode and the second mode as a high power mode.

FIG. 4 is a flowchart illustrating a method of identifying an operation mode of an electronic apparatus according to an embodiment.

The processor 120 may identify whether a neural network model is to be used in operation S410. For example, the processor 120 may identify whether a neural network model is to be used based on at least one of the operation of the electronic apparatus 100 or operability of a preset function provided by the electronic apparatus 100. The operation of the electronic apparatus 100, the preset function provided by the electronic apparatus 100, and the like may be connected to the neural network model.

When it is identified that the neural network model is to be used, the processor 120 may identify whether the electronic apparatus 100 should operate in a low power mode in operation S420. For example, the processor 120 may identify the operation mode of the electronic apparatus 100 as one of a low power mode (e.g., first power mode) or a high power mode (e.g., second power mode) based on at least one of a charging state of a battery included in the electronic apparatus 100, power consumption according to the use of the neural network model, and an importance of a function related to the use of the neural network model.

When it is identified that a neural network model is not to be used, the processor 120 may not use the neural network model, and may perform a rule-based operation or perform no operation.

The processor 120 may operate in a low power mode in operation S430, or may operate in a high power mode in operation S440, based on the identified operation mode in operation S420.

For example, when the charging state is less than a first threshold value, the processor 120 may charge the battery (i.e., the processor 120 may operate the electronic apparatus 100 in a charging mode that is different from the low power mode and the high power mode). When the charging state is equal to or greater than the first threshold value and less than a second threshold value, the processor 120 may operate in a low power mode. When it is identified that the charging state is equal to or greater than the second threshold value, the processor 120 may operate in a high power mode. The first threshold value and the second threshold value may be determined based on power consumption for performing a function related to the use of the neural network model, power consumption according to the use of the neural network model, or the like.

Alternatively, the processor 120 may receive, via the user interface 160, a user command regarding an importance of a function related to the use of the neural network model, and operate in one of a low power mode and a high power mode based on the user command. For example, when receiving a user command that the importance of the function related to the use of the neural network model is low, the processor 120 may operate in a low power mode, and when receiving a user command that the importance of the function related to the use of the neural network model is high, the processor 120 may operate in a high power mode.

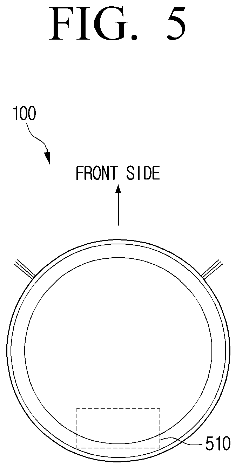

FIGS. 5 to 8 are directed a case in which the electronic apparatus 100 is a cleaner according to an embodiment.

Referring to FIGS. 5 to 8, for convenience of explanation, it is described that the electronic apparatus 100 is a cleaner, the neural network model is a model for identifying a type of floor surface on a travel path of the cleaner, and the function related to the use of the neural network model is a mop cleaning function.

However, the present disclosure is not limited thereto, and the type of the electronic apparatus 100, the type of the neural network model, and the function related to the use of the neural network model may vary.

FIG. 5 is a diagram illustrating an electronic apparatus as a cleaner according to an embodiment. As shown in FIG. 5, the electronic apparatus 100 may be a cleaner. For example, the electronic apparatus 100 may be a cleaner that travels according to the front side, includes brushes to the left and right sides of the front of the electronic apparatus 100, and includes a mop 510 at the bottom of the rear side.

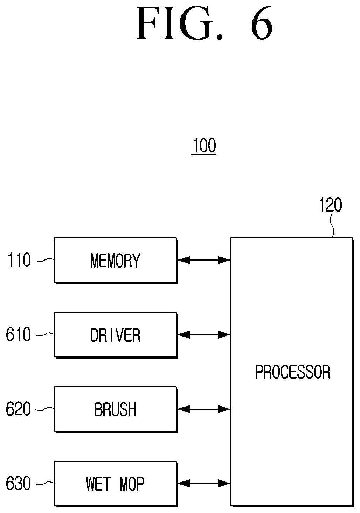

FIG. 6 is a block diagram illustrating a configuration of an electronic apparatus as a cleaner according to an embodiment. When the electronic apparatus 100 is a cleaner, the electronic apparatus 100 may include the memory 110 and the processor 120, as well as a driver 610, a brush 620, and a mop 630, as shown in FIG. 6. The detailed descriptions of aspects that are the same as or similar to the components shown in FIG. 2 may be omitted. In addition, for convenience of illustration, the electronic apparatus 100 may further include the components shown in FIG. 3, with some configurations omitted.

The driver 610 may include a configuration for moving the electronic apparatus 100 under the control of the processor 120. For example, the driver 610 may include wheels, motors, or the like for moving the electronic apparatus 100. However, the driver 610 is not limited thereto, and the driver 610 may have any configuration capable of moving the position of the electronic apparatus 100.

The brush 620 may be a circular brush for collecting dust into the inlet of the electronic apparatus 100. For example, when the brush 620 is formed on the left side with respect to the travelling direction of the electronic apparatus 100 and the inlet is formed in the center of the electronic apparatus 100, the brush 620 may rotate clockwise to collect dust into the inlet. Alternatively, when the brush 620 is formed on the right side with respect to the travelling direction of travel of the electronic apparatus 100 and the inlet is formed in the center of the electronic apparatus 100, the brush 620 may rotate counterclockwise to collect dust into the inlet.

The mop 630 may be mounted at a rear bottom of the electronic apparatus 100. The mop 630 may be detachable from the electronic apparatus 100 under control of the processor 120. Alternatively, the height of the mop 630 may be changed and spaced apart from the floor under the control of the processor 120.

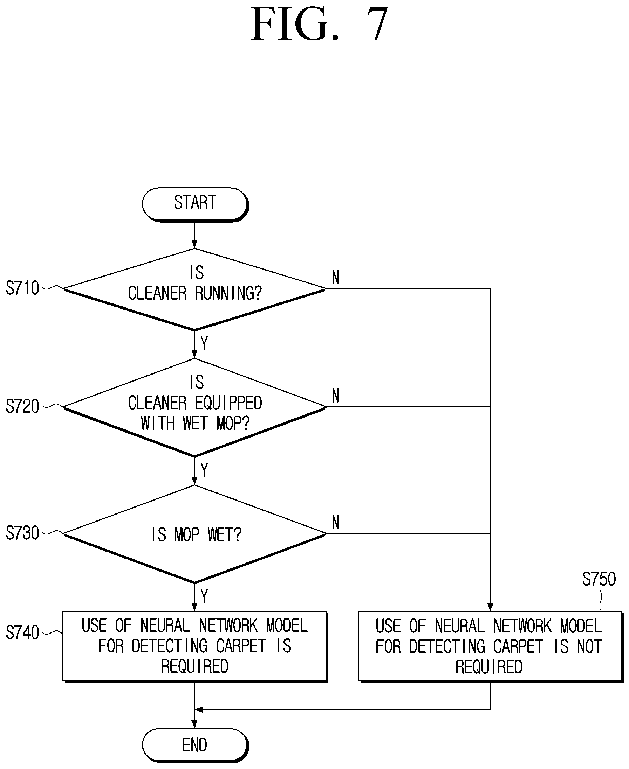

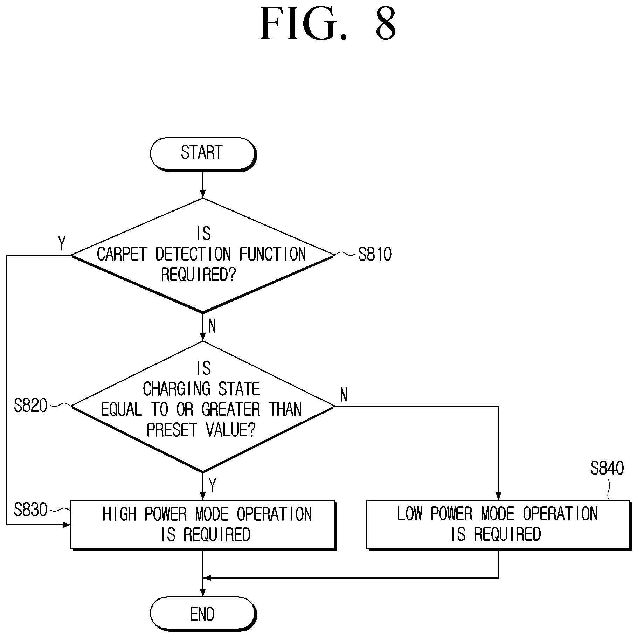

The processor 120 may control the driver 610, the brush 620, the mop 630, and the like to perform cleaning, and may change the operation mode in the corresponding process. This will be described with reference to the main operations of FIG. 4 and the detailed operations of FIGS. 7 and 8.

FIG. 7 is a flowchart illustrating a method of operating an electronic apparatus as a cleaner according to an embodiment.

The processor 120 may identify whether to use the neural network model based on the state of the electronic apparatus 100 in operation S410.

For example, as shown in FIG. 7, the processor 120 may identify whether the cleaner is running in operation S710.

When it is identified that the cleaner is running, the processor 120 may identify whether the cleaner is equipped with the mop 630 in operation S720.

When it is identified that the cleaner is equipped with the mop 630, the processor 120 may identify whether the mop 630 is in a wet state in operation S730.

When it is identified that the mop 630 is in a wet state, the processor 120 may identify that use of a neural network model for detecting a carpet is required in operation S740, and may perform the operation of preventing the carpet from being damaged by the mopping of the mop 630 or the carpet from being contaminated (soiled) by the wet or soiled mop 630.

Alternatively, when it is identified that the cleaner is not running, the cleaner is not equipped with the mop 630, or the mop 630 is not in a wet state, the processor 120 may identify that use of the neural network model for detecting a carpet is not required in operation S750. In this case, the carpet is unlikely to be damaged by mopping.

FIG. 7 is a flowchart illustrating a method of operating an electronic apparatus as a cleaner according to an embodiment.

When it is identified that the neural network model is used through the process as shown in FIG. 7, the processor 120 may identify whether the electronic apparatus 100 should operate in a low power mode in operation S420.

For example, as shown in FIG. 8, the processor 120 may identify whether a carpet detection function is required in operation S810. For example, when the user sets the use to a low power mode to prevent the carpet from being damaged, the processor 120 may identify that the carpet detection function is required, and may determine that a high power mode operation is required in operation S830.

When the carpet detection function is not required, the processor 120 may identify whether the charging state is equal to or greater than a preset value in operation S820.

When the charging state is equal to or greater than the preset value, the processor 120 may identify that a high power mode operation is required in operation S830, and when the charging state is less than the preset value, the processor 120 may identify that a low power mode operation is required in operation S840.

However, the processor 120 is not limited to the operation of FIG. 8, and the processor 120 may also identify whether the charging state is equal to or greater than a preset value even though it is identified that the carpet detection function is required. For example, even though it is identified that the carpet detection function is required, the processor 120 may identify whether the charging state is equal to or greater than a preset value, and if so, may operate in a high power mode, and if not, may charge the battery and operate in a high power mode.

In addition, the processor 120 may identify the charging state in greater detail. For example, when the charging state is less than a first threshold value, the processor 120 may charge the cleaner. When the charging state is equal to or greater than the first threshold value and less than a second threshold value, the processor 120 may operate in a low power mode. When the charging state is equal to or greater than the second threshold value, the processor 120 may operate in a high power mode.

Based on the identified operation mode, the processor 120 may use a neural network model to identify the type of floor surface in the travel path of the cleaner, and when the identified type is a preset type, may change the travel path or limit the use of the mop cleaning function. For example, the processor 120 may use a neural network model to identify the type of floor surface in the travel path of the cleaner based on the identified operation mode, and when the identified type is a carpet type, the processor 120 may change the travel path to avoid the carpet, move the mop away from the floor surface, or remove the mop and proceed with cleaning. Through the above operations, it is possible to efficiently use the neural network model to efficiently manage power consumption while preventing the carpet from being damaged.

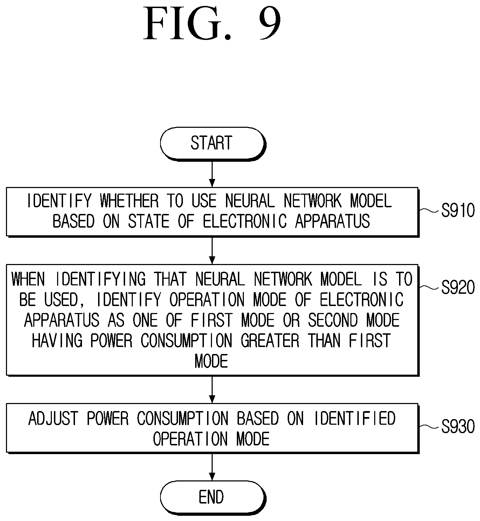

FIG. 9 is a flowchart illustrating a controlling method of an electronic apparatus according to an embodiment.

The electronic apparatus may identify whether to use a neural network model is identified in operation S910. When it is identified that the neural network model is to be used, the operation mode of the electronic apparatus is identified as one of a first mode or a second mode having power consumption greater than the first mode in operation S920. Subsequently, power consumption according to the use of the neural network model is adjusted based on the identified operation mode in operation S930.

The operation S930 of adjusting may include, based on identifying that the operation mode of the electronic apparatus is the second mode, entering at least one input feature to the neural network model, and based on identifying that the operation mode of the electronic apparatus is the first mode, updating some values of the at least one input feature to preset values and entering the updated at least one input feature to the neural network model.

The operation S930 of adjusting may include, based on identifying that the operation mode of the electronic apparatus is the first mode, updating some values of the at least one input feature to preset values based on at least one of a feature importance value indicating an importance of each of the at least one input feature of the neural network model or a data type of each of the at least one input feature.

The operation S930 of adjusting may include, based on identifying that the operation mode of the electronic apparatus is the first mode, using a first neural network model, and based on identifying that the operation mode of the electronic apparatus is the second mode, using a second neural network model with higher performance than the first neural network model.

The second neural network model may have more input features and layers than the first neural network model, and may consume more power than the first neural network model.

The operation S910 of identifying whether to use a neural network model may include identifying whether to use a neural network model based on at least one of an operation of the electronic apparatus and operability of a preset function provided by the electronic apparatus.

The operation S920 of identifying the operation mode of the electronic apparatus may include identifying the operation mode of the electronic apparatus as one of the first mode or the second mode based on at least one of a charging state of a battery included in the electronic apparatus, power consumption according to the use of the neural network model, and an importance of a function related to the use of the neural network model.

The operation S920 of identifying the operation mode of the electronic apparatus may include, when the charging state is less than a first threshold value, charging the battery, when the charging state is equal to or greater than the first threshold value and less than a second threshold value, identifying the operation mode of the electronic apparatus as the first mode, and when the charging state is equal to or greater than the second threshold value, identifying the operation mode of the electronic apparatus as the second mode.

The operation S920 of identifying the operation mode of the electronic apparatus may include receiving a user command regarding the importance of a function related to the use of the neural network model, and identifying the operation mode of the electronic apparatus as one of the first mode or the second mode based on the user command.

The operation S910 of identifying whether to use the neural network model may include, when the posture of the electronic apparatus is changed by more than a preset value, identifying whether to use a neural network model based on the posture of the electronic apparatus.

The electronic apparatus may be a cleaner, the operation S910 of identifying whether to use a neural network model may include identifying whether to use a neural network model based on at least one of whether the cleaner is running and whether a mop cleaning function of the cleaner is available, and the operation S920 of identifying the operation mode of the electronic apparatus may include, when it is identified that the neural network model is to be used, identifying the operation mode of the cleaner as one of a first mode or a second mode based on at least one of a charging state of a battery included in the cleaner, power consumption according to the use of the neural network model, and a user command for the first mode.

The method may further include identifying a type of floor surface on a travel path of the cleaner, and when the identified type is a preset type, changing the travel path or limiting the use of the mop cleaning function.

According to various embodiments, an electronic apparatus may efficiently manage resources and reduce power consumption by adjusting power consumption according to the use of a neural network model based on various conditions.

According to an embodiment, the above-described various embodiments may be implemented as software including instructions stored in machine-readable storage media, which may be read by machine (e.g., computer). The machine refers to a device that calls instructions stored in a storage medium, and may operate according to the called instructions, and the device may include an electronic apparatus according to the aforementioned embodiments. In case an instruction is executed by a processor, the processor may perform a function corresponding to the instruction by itself, or by using other components under its control. An instruction may include a code that is generated or executed by a compiler or an interpreter. The machine-readable storage medium may be provided in the form of a non-transitory storage medium. Here, the term "non-transitory" may indicate that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser. The computer program product may be distributed in the form of a storage medium (for example, a compact disc (CD) ROM (CD-ROM)) that may be read by the machine or online through an application store (for example, PlayStore^{™}). In case of the online distribution, at least a portion of the computer program product may be at least temporarily stored in a storage medium such as a memory of a server of a manufacturer, a server of an application store, or a relay server or be temporarily generated.

In addition, according to an embodiment, the above-described various embodiments may be implemented in a recording medium that may be read by a computer or a similar device using software, hardware, or a combination thereof. In some cases, embodiments described herein may be implemented by a processor itself. According to software implementation, embodiments such as procedures and functions described in this specification may be implemented as separate software. Each software may perform one or more functions and operations described in this disclosure.

Computer instructions for performing processing operations of devices according to the above-described various embodiments may be stored in a non -transitory computer-readable medium. When being executed by a processor of a specific device, the computer instructions stored in such a non-transitory computer-readable medium allows the specific device to perform processing operations in the device according to the above-described various embodiments. The non-transitory computer-readable medium refers to a medium that stores data semi-permanently and may be read by a device, rather than a medium that stores data for a short period of time, such as registers, caches, and memories. Specific examples of the non-transitory computer-readable medium may include CD, digital video disc (DVD), hard disk, Blu-ray disk, USB, memory card, ROM, etc.

In addition, the components (for example, modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, or at least some of the operations may be performed in a different order or be omitted, or other operations may be added.

The embodiments of the disclosure disclosed in the specification and the drawings provide merely specific examples to easily describe technical content according to the embodiments of the disclosure and help the understanding of the embodiments of the disclosure, not intended to limit the scope of the embodiments of the disclosure. Accordingly, the scope of various embodiments of the disclosure should be interpreted as encompassing all modifications or variations derived based on the technical spirit of various embodiments of the disclosure in addition to the embodiments disclosed herein.

## Claims

1. An electronic apparatus, comprising:
memory storing instructions; and
at least one processor connected to the memory and configured to control the electronic apparatus using a neural network model,
wherein the instructions, when executed by the at least one processor, cause the electronic apparatus to :
identify whether to use the neural network model based on a state of the electronic apparatus;
based on identifying that the neural network model is to be used:
identify an operation mode of the electronic apparatus as one of a first mode having a first power consumption or a second mode having a second power consumption greater than the first power consumption; and
adjust power consumption of the electronic apparatus based on the identified operation mode.

2. The electronic apparatus as claimed in claim 1, wherein the instructions, when executed by the at least one processor, cause the electronic apparatus to:
based on identifying that the operation mode of the electronic apparatus is the second mode, enter an input feature to the neural network model; and
based on identifying that the operation mode of the electronic apparatus is the first mode, update values of the input feature to preset values, and enter the input feature having updated values to the neural network model.

3. The electronic apparatus as claimed in claim 2, wherein the instructions, when executed by the at least one processor, cause the electronic apparatus to update values of the input feature to preset values based on at least one of a feature importance value or a data type of the input feature, and
wherein the feature importance value indicates an importance of the input feature.

4. The electronic apparatus as claimed in claim 1, wherein the instructions, when executed by the at least one processor, cause the electronic apparatus to:
based on identifying that the operation mode of the electronic apparatus is the first mode, use a first neural network model; and
based on identifying that the operation mode of the electronic apparatus is the second mode, use a second neural network model with higher power consumption than the first neural network model.

5. The electronic apparatus as claimed in claim 4, wherein the second neural network model comprises more input features and layers than the first neural network model and is configured to consume more power than the first neural network model.

6. The electronic apparatus as claimed in claim 1, wherein the instructions, when executed by the at least one processor, cause the electronic apparatus to identify whether to use the neural network model based on at least one of an operation of the electronic apparatus and an operability of a preset function provided by the electronic apparatus.

7. The electronic apparatus as claimed in claim 1, wherein the instructions, when executed by the at least one processor, cause the electronic apparatus to identify the operation mode of the electronic apparatus as one of the first mode or the second mode based on at least one of a charging state of a battery of the electronic apparatus, power consumption according to the use of the neural network model and an importance of a function related to the use of the neural network model.

8. The electronic apparatus as claimed in claim 7, wherein the instructions, when executed by the at least one processor, cause the electronic apparatus to:
based on the charging state being less than a first threshold value, charge the battery;
based on the charging state being equal to or greater than the first threshold value and less than a second threshold value, identify the operation mode of the electronic apparatus as the first mode; and
based on the charging state being equal to or greater than the second threshold value, identify the operation mode of the electronic apparatus as the second mode.

9. The electronic apparatus as claimed in claim 7, further comprising:
a user interface,
wherein the instructions, when executed by the at least one processor, cause the electronic apparatus to:
receive a user command regarding the importance of a function related to the use of the neural network model through the user interface; and
identify the operation mode of the electronic apparatus as one of the first mode or the second mode based on the user command.

10. The electronic apparatus as claimed in claim 1, further comprising:
a sensor configured to detect a posture of the electronic apparatus,
wherein the instructions, when executed by the at least one processor, cause the electronic apparatus to, identify whether to use the neural network model based on the posture of the electronic apparatus being changed by more than a preset value, and identify whether to use the neural network model based on the posture of the electronic apparatus.

11. The electronic apparatus as claimed in claim 1, wherein the electronic apparatus comprises a cleaner; and
wherein the instructions, when executed by the at least one processor, cause the electronic apparatus to:
identify whether to use the neural network model based on at least one of the cleaner running or a mop cleaning function of the cleaner being available;
based on identifying that the neural network model is to be used:
identify the operation mode of the cleaner as one of the first mode or the second mode based on at least one of a charging state of a battery of the electronic apparatus, power consumption according to the use of the neural network model, and a user command for the first mode; and
adjust power consumption based on the identified operation mode.

12. The electronic apparatus as claimed in claim 11, wherein the instructions, when executed by the at least one processor, cause the electronic apparatus to:
identify a type of floor surface on a travel path of the cleaner using the neural network model; and
based on the identified type being a preset type, change the travel path or limit use of the mop cleaning function.

13. A method of controlling an electronic apparatus, the method comprising:
identifying whether to use a neural network model based on a state of the electronic apparatus;
based on identifying that the neural network model is to be used:
identifying an operation mode of the electronic apparatus as one of a first mode having a first power consumption or a second mode having second power consumption greater than the first power consumption; and
adjusting power consumption based on the identified operation mode.

14. The method as claimed in claim 13, wherein the adjusting of the power consumption comprises:
based on identifying that the operation mode of the electronic apparatus is the second mode, entering an input feature to the neural network model; and
based on identifying that the operation mode of the electronic apparatus is the first mode, updating values of the input feature to preset values, and entering the input feature having updated values to the neural network model.

15. The method as claimed in claim 14, wherein the updating the values of the input feature to preset values is performed based on at least one of a feature importance value indicating importance of the input feature of or a data type of the input feature.
